# FASCICULE DE BREVET EUROPEEN

(11) **EP 1 288 522 B1**
(45) Date de publication et mention de la délivrance du brevet: **06.10.2004**
(21) Numéro de dépôt: 02291891.6
(22) Date de dépôt: 25.07.2002
(51) Int. Cl.: F16D 65/12, F16D 65/847

(54) **Dispositif de freinage refroidi par pulvérisation**
Durch Besprühen gekühlte Bremsvorrichtung
Brake device cooled by spraying

(30) Priorité: 30.08.2001 FR 0111273
(43) Date de publication de la demande: 05.03.2003
(73) Titulaire: Peugeot Citroen Automobiles SA, 92200 Neuilly sur Seine (FR)
(72) Inventeur: Bailleux, François, 91400 Val D'Albian (FR)
(74) Mandataire: Thinat, Michel

(56) Documents cités:
- DE-A- 4 019 806
- FR-A- 2 796 024
- PATENT ABSTRACTS OF JAPAN vol. 1996, no. 11, 29 novembre 1996 (1996-11-29) & JP 08 177913 A (MITSUBISHI MOTORS CORP), 12 juillet 1996 (1996-07-12)

## Description

La présente invention concerne de façon générale le refroidissement des freins de véhicules automobiles, et plus particulièrement des freins à disques.

Plus précisément, l'invention concerne un frein à disque pour véhicule à moteur, comprenant un disque métallique, des organes de friction, et des moyens de refroidissement, le disque étant entraîné en rotation avec une roue du véhicule, les organes de friction étant sélectivement appliqués sur des pistes de friction définies sur deux faces respectives opposées du disque, les pistes de friction délimitant entre elles un volume cylindrique annulaire, radialement bordé par une surface cylindrique interne de rayon relativement petit et par une surface cylindrique externe de rayon relativement grand, et les moyens de refroidissement étant prévus pour mettre en contact avec le disque un liquide présentant une température d'ébullition inférieure à une température maximale de fonctionnement du disque.

Des dispositifs de ce type sont connus de l'art antérieur. La demande de brevet français n° FR 2796024 décrit un dispositif de freinage à disque comprenant des moyens de refroidissement qui peuvent pulvériser un liquide sur une face au moins du disque s'il s'agit d'un disque plein, et/ou dans des canaux de refroidissement du disque si ce dernier présente des ailettes de refroidissement délimitant de tels canaux. Les moyens de refroidissement sont utilisés quand les freins sont fortement sollicités (freinage d'urgence à grande vitesse, descente longue et/ou abrupte en montagne). Les freins étant traditionnellement dimensionnés pour de tels cas, dont la fréquence est rare, l'utilisation de moyens de refroidissement par pulvérisation permet de limiter les contraintes de dimensionnement des freins.

La durée de contact entre le liquide de refroidissement et le disque est faible dans de tels dispositifs car le liquide est très rapidement projeté loin du disque sous l'effet de la force centrifuge. Seule une fraction du liquide est transformée en vapeur et sert effectivement à refroidir le disque. Le rendement de ce système de refroidissement est donc moyen.

Dans ce contexte, la présente invention a pour but d'améliorer l'efficacité du refroidissement du disque en allongeant le temps de contact entre le liquide de refroidissement et le disque et de diminuer la consommation de liquide en l'utilisant plus complètement. Comme l'efficacité du refroidissement est meilleure, les contraintes de dimensionnement du système de freinage sont allégées par rapport à l'antériorité citée.

A cette fin, le dispositif de l'invention, par ailleurs conforme à la définition générique qu'en donne le préambule ci-dessus, est essentiellement caractérisé en ce que les moyens de refroidissement comprennent une gorge creusée dans le disque à partir de la surface cylindrique interne et fermée par un fond et des parois étanches au liquide.

Dans un mode de réalisation possible de l'invention, une grille recouvre la gorge pour en interdire l'accès à des particules solides de taille supérieure à une limite déterminée.

Avantageusement, les moyens de refroidissement peuvent comprendre un dispositif de pulvérisation du liquide dans la gorge.

Le volume cylindrique évidé que les pistes de friction délimitent entre elles peut par exemple être formé, à l'exception de la gorge, par une masse homogène de métal.

De préférence, le liquide de refroidissement peut être une solution aqueuse ou constitué d'eau.

D'autres caractéristiques et avantages de l'invention ressortiront clairement de la description qui en est faite ci-après, à titre indicatif et nullement limitatif, en référence aux dessins annexés dans lesquels :
- la figure 1 est une vue schématique en coupe partielle d'un frein à disque utilisant l'enseignement de l'invention;
- la figure 2 est l'agrandissement d'un détail de la figure 1;

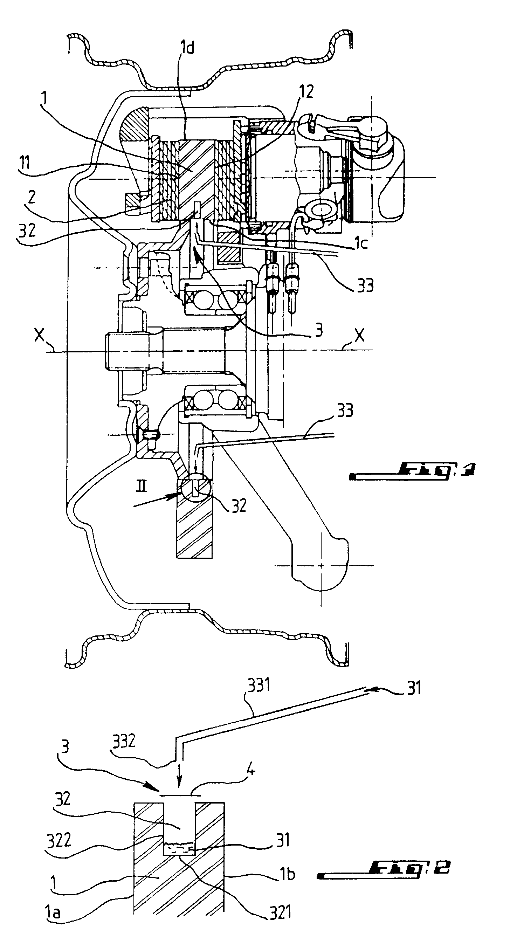

L'invention concerne un frein à disque pour véhicule à moteur, comprenant un disque métallique 1, des organes de friction 2, et des moyens de refroidissement 3. Le disque 1 est entraîné en rotation avec une roue du véhicule d'axe X.

Les organes de friction 2, par exemple des plaquettes de freins, sont sélectivement appliqués sur des pistes de friction 11 et 12 définies sur deux faces respectives 1a et 1b opposées du disque 1 pour ralentir le véhicule. La mise en contact des organes de friction 2 et du disque 1 provoque un frottement. Par ce phénomène, l'énergie cinétique du véhicule est transformée en énergie thermique, provoquant en particulier un échauffement du disque 1.

Les pistes de friction 11 et 12 délimitent entre elles un volume cylindrique annulaire, présentant une symétrie de révolution autour de l'axe X de la roue, la section de ce volume dans un plan perpendiculaire à l'axe X étant annulaire. Ce volume est radialement bordé par une surface cylindrique interne 1c de rayon relativement petit et par une surface cylindrique externe 1d de rayon relativement grand.

Les moyens de refroidissement 3 permettent de mettre en contact avec le disque 1 un liquide 31 présentant une température d'ébullition inférieure à une température maximale de fonctionnement du disque 1. Une partie de la chaleur dégagée par le frottement des organes de friction 2 sur le disque 1 est transférée par conduction, convection et/ou rayonnement du disque 1 au liquide 31, provoquant l'échauffement puis la vaporisation de ce liquide 31. Ce phénomène permet de limiter l'échauffement du disque 1.

Dans le mode de réalisation illustré, une gorge 32 est creusée dans le disque 1 à partir de la surface cylindrique interne 1c et fermée par un fond 321 et des parois 322 étanches au liquide 31. Le liquide de refroidissement est injecté dans cette gorge 32 par un dispositif de projection 33. Tant que la roue du véhicule tourne, la force centrifuge va contribuer à refouler le liquide 31 au fond de la gorge 32. Le liquide 31 restera dans la gorge 32 jusqu'à ce que le transfert de chaleur venant du disque 1 ait provoqué une évaporation complète, ou jusqu'à ce que le véhicule ait suffisamment ralenti pour que le liquide 31 puisse tomber par gravité hors de la gorge 32.

La gorge 32 constitue donc un petit réservoir de liquide de refroidissement 31. Le temps de contact entre le liquide 31 et le disque 1 est grandement allongé par rapport à l'art antérieur.

Pour éviter l'encrassement, voire le bouchage complet de la gorge 32, le dispositif peut comprendre une grille 4 recouvrant la gorge 32 pour en interdire l'accès à des particules solides de taille supérieure à une limite déterminée. Cette grille peut être une tôle perforée, un petit grillage, ou un autre élément équivalent.

Les moyens de refroidissement 3 peuvent comprendre un dispositif de pulvérisation du liquide 31 dans la gorge 32. Ce dispositif peut comprendre une ou plusieurs tubulures 331, associées chacune à une buse 332 située en regard de la gorge 32.

L'invention est particulièrement bien adaptée quand le volume délimité par les pistes de friction 11 et 12 est formé, à l'exception de la gorge 32, par une masse homogène de métal, c'est-à-dire lorsque le disque est plein, mais peut être facilement adapté au cas où ce même volume comporte des canaux radiaux évidés, c'est-à-dire lorsque le disque est ventilé.

Dans un mode de réalisation préféré de l'invention, le liquide de refroidissement 31 est une solution aqueuse ou constitué d'eau.

## Revendications

1. Frein à disque pour véhicule à moteur, comprenant un disque métallique (1), des organes de friction (2), et des moyens de refroidissement (3), le disque (1) étant entraîné en rotation avec une roue du véhicule, les organes de friction (2) étant sélectivement appliqués sur des pistes de friction (11) et (12) définies sur deux faces respectives (la) et (1b) opposées du disque (1), les pistes de friction (11) et (12) délimitant entre elles un volume cylindrique annulaire, radialement bordé par une surface cylindrique interne (1c) de rayon relativement petit et par une surface cylindrique externe (1d) de rayon relativement grand, et les moyens de refroidissement (3) étant prévus pour mettre en contact avec le disque (1) un liquide (31) présentant une température d'ébullition inférieure à une température maximale de fonctionnement du disque (1), **caractérisé en ce que** les moyens de refroidissement (3) comprennent une gorge (32) creusée dans le disque (1) à partir de la surface cylindrique interne (1c) et fermée par un fond (321) et des parois (322) étanches au liquide et des moyens d'injection dudit liquide (31) dans la gorge (32).

2. Frein à disque suivant la revendication 1, **caractérisé en ce qu'**il comprend une grille (4) recouvrant la gorge (32) pour en interdire l'accès à des particules solides de taille supérieure à une limite déterminée.

3. Frein à disque suivant la revendication 1 ou 2, **caractérisé en ce que** les moyens de refroidissement (3) comprennent un dispositif de pulvérisation du liquide (33) dans la gorge (32).

4. Frein à disque suivant l'une quelconque des revendications précédentes, **caractérisé en ce que** le volume cylindrique évidé que les pistes de friction (11) et (12) délimitent entre elles est formé, à l'exception de la gorge (32), par une masse homogène de métal.

5. Frein à disque suivant l'une quelconque des revendications précédentes, **caractérisé en ce que** le liquide de refroidissement (31) est une solution aqueuse ou constitué d'eau.

## Claims

1. Disc brake for motor vehicle, comprising a metal disc (1), friction members (2) and cooling means (3), the disc (1) being driven in rotation with a wheel of the vehicle, the friction members (2) being selectively applied to friction tracks (11) and (12) defined on two opposite faces (1a) and (1b), respectively, of the disc (1), the friction tracks (11 and (12) delimiting between them an annular cylindrical volume radially flanked by an internal cylindrical surface (1c) of relatively small radius and by an external cylindrical surface (1d) of relatively large radius, and the cooling means (3) being adapted to bring into contact with the disc (1) a liquid (31) having a boiling point lower than a maximum operating temperature of the disc (1), **characterised in that** the cooling means (3) comprise a groove (32) hollowed out from the disc (1) from the internal cylindrical surface (1c) and closed by a bottom (321) and walls (322) impermeable to the liquid, and means for injecting said liquid (31) into the groove (32).

2. Disc brake according to claim 1, **characterised in that** it comprises a grid (4) covering the groove (32) to prevent access thereto of solid particles of a size exceeding a particular limit.

3. Disc brake according to claim 1 or claim 2, **characterised in that** the cooling means (3) comprise a device for spraying the liquid (33) into the groove (32).

4. Disc brake according to any preceding claim, **characterised in that** the hollowed out cylindrical volume that the friction tracks (11) and (12) delimit between them is formed, with the exception of the groove (32), by a homogeneous mass of metal.

5. Disc brake according to any preceding claim, **characterised in that** the cooling liquid (31) is an aqueous solution or water.

## Patentansprüche

1. Scheibenbremse für Motorfahrzeuge, mit einer Metallscheibe (1), Reiborganen (2) und Kühlmitteln (3), wobei die Scheibe (1) mit einem Rad des Fahrzeugs drehend angetrieben wird, wobei die Reiborgane (2) selektiv an Reibbahnen (11) und (12) angedrückt werden, die an den beiden jeweiligen entgegengesetzten Seiten (1a) und (1 b) der Scheibe (1) definiert sind, wobei die Reibbahnen (11) und (12) zwischen einander einen kreiszylindrischen Raum begrenzen, der radial von einer zylindrischen Innenfläche (1c) mit relativ kleinem Radius und von einer zylindrischen Außenfläche (1 d) mit relativ großem Radius eingefasst wird, und wobei die Kühlmittel (3) dazu vorgesehen sind, mit der Scheibe (1) eine Flüssigkeit (31) in Kontakt zu bringen, die eine Siedetemperatur aufweist, die unter einer maximalen Betriebstemperatur der Scheibe (1) liegt, **dadurch gekennzeichnet, dass** die Kühlmittel (3) eine Nut (32) enthalten, die ausgehend von der zylindrischen Innenfläche (1c) in der Scheibe (1) ausgeführt ist und von einem flüssigkeitsdichten Boden (321) und flüssigkeitsdichten Wänden (322) verschlossen wird, sowie Mittel zum Einspritzen der Flüssigkeit (31) in die Nut (32).

2. Scheibenbremse nach Anspruch 1, **dadurch gekennzeichnet, dass** sie ein Gitter (4) enthält, das die Nut (32) überdeckt, um zu verhindern, dass Feststoffteilchen mit einer Größe über einer bestimmten Grenze darin eindringen.

3. Scheibenbremse nach Anspruch 1 oder 2, **dadurch gekennzeichnet, dass** die Kühlmittel (3) eine Vorrichtung zum Zerstäuben der Flüssigkeit (33) in der Nut (32) enthalten.

4. Scheibenbremse nach einem der vorangehenden Ansprüche, **dadurch gekennzeichnet, dass** der ausgesparte Zylinderraum, den die Reibbahnen (11) und (12) zwischen sich begrenzen, mit Ausnahme der Nut (32) von einer homogenen Metallmasse gebildet wird.

5. Scheibenbremse nach einem der vorangehenden Ansprüche, **dadurch gekennzeichnet, dass** die Kühlflüssigkeit (31) eine wässrige Lösung ist oder aus Wasser besteht.
